# EUROPEAN PATENT APPLICATION

(11) **EP 4 403 963 A1**
(43) Date of publication of application: **24.07.2024**
(21) Application number: 23152128.7
(22) Date of filing: 18.01.2023
(51) Int. Cl.: G01W 1/10, G01W 1/14

(54) **SYSTEMS AND METHODS FOR ESTIMATING FLOODS**

(71) Applicant: Iceye Oy, 02150 Espoo (FI)
(72) Inventor: Friberg, Tapio, 02150 Espoo (FI); Dupeyrat, Arnaud, 02150 Espoo (FI); Khadka, Ambika, 02150 Espoo (FI)
(74) Representative: Forresters IP LLP

(57) **Abstract**

Methods, systems, and techniques for estimating flooding are disclosed. A flood estimation method comprises receiving input data associated with a flood event for executing a hydrological model; receiving external flood data of the flood event; validating the input data over one or more iterations based on the external flood data; and executing the hydrological model using validated input data to estimate water levels of the flood event, the validated input data based on a candidate input dataset providing a candidate model output with a satisfactory fit to the external flood data.

## Description

### FIELD

The present disclosure is directed to estimating floods using data from a variety of sources to estimate water levels of a flood event.

### BACKGROUND

Hydrological models can be used for simulating floods. Existing hydrological models receive input data such as rainfall data, terrain data, land use/cover, etc., and model the input data to simulate a flood. However, outputs of the hydrological models can often contain significant inaccuracies due to errors in input data, errors computed from the model itself, and/or sensitivity to the input data and other parameters of the model. As such, the model output for a specific time or event may be unreliable to guide decision making. For example, governments and/or insurance companies may be interested in the peak flood level during a flooding event, however the peak flood level predicted by a model is often inaccurate for the reasons above.

In attempt to improve the accuracy of the output, complex hydrological models are used which can take several hours or days of computing time, resulting in a delayed output as well as significant computing resources and monetary expense. Further, even these more complex hydrological models can be inaccurate due to the difficulty of modeling the flow of water over land and the sensitivity of flooding to variables such as localized rainfall and terrain variations. Complex hydrological models are also unable to accurately estimate temporal changes in the input data, and accordingly, as the flooding event progresses a previously computed model becomes inaccurate due to the inability to predict and account for changes to the input data. Given the above-noted complexities of hydrological models, it is impractical to continuously run the hydrological model in attempt to account for updated input data.

### SUMMARY

According to a first aspect, there is provided a flood estimation method, comprising: receiving input data associated with a flood event for executing a hydrological model; receiving external flood data of the flood event; validating the input data over one or more iterations based on the external flood data, by performing, at each of the one or more iterations: generating a plurality of candidate input datasets for a current iteration, the plurality of candidate input datasets for a first iteration generated from the input data, and the plurality of candidate input datasets for a subsequent iteration generated based on one or more satisfactory candidate input datasets from a previous iteration; executing the hydrological model with the plurality of candidate input datasets to generate a plurality of candidate model outputs; and comparing the plurality of candidate model outputs against the external flood data to identify the one or more satisfactory candidate input datasets from the current iteration; and executing the hydrological model using validated input data to estimate water levels of the flood event, the validated input data based on a candidate input dataset providing a candidate model output with a satisfactory fit to the external flood data.

In some aspects, the input data comprises measured data, forecasted data, or a combination thereof.

In some aspects, the plurality of candidate input datasets for the current iteration are generated for the first iteration from a stochastic sampling of an offset for the input data, and are generated for subsequent iterations from a stochastic sampling of an offset for the one or more satisfactory candidate input datasets from a previous iteration.

In some aspects, the offset is stochastically sampled from a distribution of offsets for the input data. In some aspects, the distribution is a Gaussian distribution.

In some aspects, the flood estimation method further comprises determining at each iteration a measure of how closely each of the plurality of candidate model outputs match the external flood data, wherein validating the input data over the one or more iterations is performed until: (a) each of the plurality of candidate model outputs in the current iteration are within a predetermined threshold of the external flood data; (b) each of the plurality of candidate model outputs in the current iteration are unchanged from the previous iteration; or (c) a predetermined number of iterations have been performed without satisfying (a) or (b).

In some aspects, executing the hydrological model with the plurality of candidate input datasets comprises executing the hydrological model in parallel with each of the plurality of candidate input datasets for the current iteration.

In some aspects, comparing each of the plurality of candidate model outputs to the external flood data comprises scoring each of the plurality of candidate model outputs according to how closely they match the external flood data.

In some aspects, the external flood data comprises a plurality of external datasets, and comparing each of the plurality of candidate model outputs to the external flood data comprises comparing each of the plurality of candidate model outputs to each of the plurality of external datasets.

In some aspects, comparing the plurality of candidate model outputs against the external flood data comprises one or more of: determining an average error between the candidate model output and the external flood data; and determining whetherthe candidate model output satisfies a flood criterion set by the external flood data, and if the candidate model output is unsatisfactory with respect to the flood criterion, determining a distance to the flood criterion.

In some aspects, the external flood data comprises one or more of: earth observation data, gauge data, and social networking service data.

In some aspects, the external flood data comprises gauge data, and wherein comparing the plurality of candidate model outputs against the external flood data comprises evaluating a mean average error between the gauge data in the external flood data and a sampling point from each of the plurality of candidate model outputs set on a location of the gauge data; and/or the external flood data comprises social networking service data, and wherein comparing the plurality of candidate model outputs against the external flood data comprises setting a criterion of a water depth at a geolocation based on the SNS data, comparing a simulated water depth at the geolocation for each of the plurality of candidate output models to the criterion, evaluating whether the simulated water depth at the geolocation satisfies the criterion, and if not, evaluating how much lower the simulated depth at the geolocation is relative to the water depth from the SNS data; and/or the external flood data comprises earth observation data, and wherein comparing the plurality of candidate model outputs against the external flood data comprises predicting a probability of areas being flooded within a region of the earth observation data, calculating an earth observation data output vector using areas associated with a high probability and low probability of flooding, generating a candidate model output vector for each of the plurality of candidate model outputs based on areas that are simulated to be flooded and areas that are simulated to not be flooded according to a predefined simulated water depth, and comparing the earth observation data output vector to the candidate model output vector for each of the plurality of candidate model outputs by computing a cross entropy of the earth observation data output vector against the candidate model output vector.

In some aspects, the flood estimation method further comprises generating boundary conditions from one or both of the input data and the external data, the boundary conditions being used as boundaries that limit the plurality of candidate input datasets.

In some aspects, the flood estimation method further comprises selecting the hydrological model from a plurality of hydrological models, wherein selecting the hydrological model comprises: executing each of the plurality of hydrological models using a same input dataset to generate respective model outputs for each of the plurality of hydrological models; comparing the respective model outputs to the external flood data; and selecting the hydrological model that generated a satisfactory model output with respect to the external flood data.

In some aspects, the flood estimation method further comprises generating and displaying a peak flood map of the flood event from the estimate of water levels.

According to a second aspect, there is provided a system, comprising: a database having input data associated with a flood event and external flood data stored therein; a processor; and a non-transitory computer readable medium having stored thereon computer program code that is executable by the processor and that, when executed by the processor, causes the system to perform the flood estimation method of any one of the above aspects.

In some aspects, the system further comprises a plurality of processors configured to run in parallel, and wherein the plurality of processors are configured to execute the hydrological model in parallel using respective ones of the plurality of stochastic input datasets to generate the plurality of candidate outputs.

According to a third aspect, there is provided a non-transitory computer readable medium having stored thereon computer program code that is executable by a processor and that, when executed by the processor, causes the processor to perform the method of any one of the above aspects.

This summary does not necessarily describe the entire scope of all aspects. Other aspects, features and advantages will be apparent to those of ordinary skill in the art upon review of the following description of specific embodiments.

### BRIEF DESCRIPTION OF THE FIGURES

In order that the present disclosure may be more readily understood, preferable embodiments thereof will now be described, by way of example only, with reference to the accompanying drawings, in which:
FIG. 1 depicts a system for implementing a flood estimation method;
FIG. 2 depicts a general flow performed by the system for executing the flood estimation method;
FIG. 3 further depicts the external flood data being used to iteratively update the input data used in the hydrological model;
FIG. 4 depicts a representation of water gauge data points in an example flood area;
FIG. 5 depicts a representation of Social Networking Service (SNS) data points in an example flood area;
FIG. 6 depicts a flood estimation method;
FIG. 7 depicts a method of validating the input data;
FIGs. 8A to 8C depict an iterative refinement of candidate outputs towards external gauge data in accordance with the flood estimation method;
FIGs. 9A to 9D show examples of different peak water depth outputs simulated using different candidate input datasets;
FIG. 10 depicts an example of a peak flood map; and
FIG. 11 depicts a representation of an area of uncertainty in the simulated flood.

### DETAILED DESCRIPTION OF THE DISCLOSURE

In accordance with the present disclosure, a flood estimation method is described that can validate input data that is used for executing a hydrological model. The flood estimation method generates a plurality of candidate input datasets and executes the hydrological model with the plurality of candidate input datasets to generate a plurality of candidate model outputs. The plurality of candidate model outputs are compared to external flood data to identify one or more satisfactory candidate input datasets that produced a satisfactory candidate model output based on the external flood data. The satisfactory candidate input datasets can be used to generate a subsequent plurality of candidate input datasets, and with an iterative approach the candidate input datasets produce better candidate model outputs as validated by the external flood data. The hydrological model can thus be executed using validated input data that provides a candidate model output with a satisfactory fit to the external flood data.

Since the external flood data is used to validate and update the quality of the input data and corresponding model output, the flood estimation method as described herein can overcome inaccuracies in the input data and produce a more accurate model output representing the flood event. Moreover, since an accurate model output can be produced by validating the candidate model outputs against external flood data, a simpler hydrological model can be used, which can generate a model output much fasterthan complex hydrological models and at a lower cost. To further reduce computation time associated with running the hydrological model multiple times to generate the plurality of candidate model outputs, a system implementing the flood estimation method may comprise a plurality of processors configured to run in parallel, each generating a different candidate model output using different candidate input datasets.

Accordingly, the flood estimation method described herein may be performed more frequently than if a complex hydrological model were used. Since the flood estimation method can be performed more frequently than existing techniques, the flood estimation method can be executed in response to dynamically changing input data (and/or external flood data), thus providing a better and more up-to-date model output for a dynamically changing flood event.

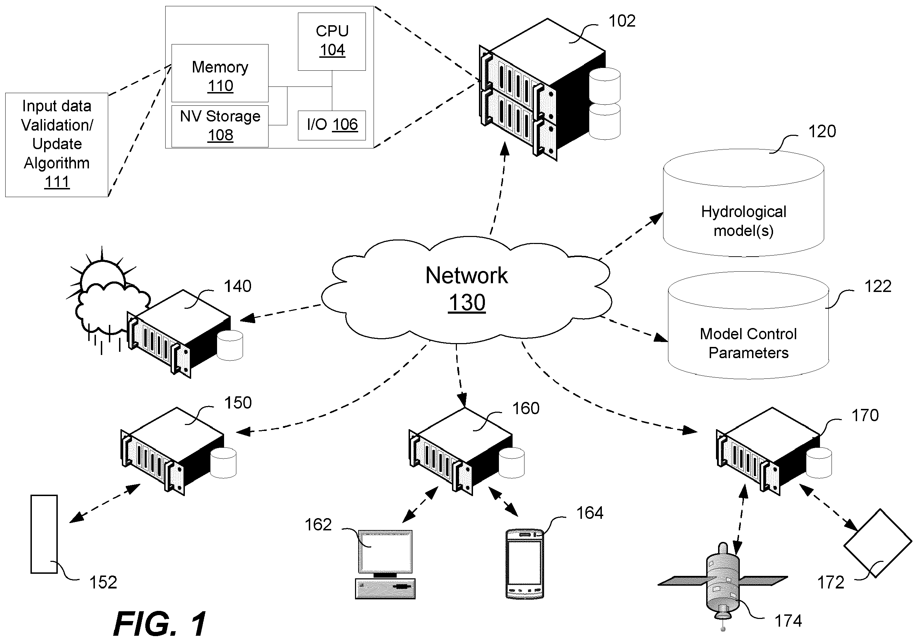

Embodiments are described below, by way of example only, with reference to Figures 1 to 11.

FIG. 1 depicts a system for implementing a flood estimation method. The system comprises one or more computing devices 102 (e.g. servers) configured to implement the flood estimation method. The computing devices 102 may be distributed (cloud-based). The computing devices 102 may comprise a plurality of computing devices configured to run in parallel for implementing the flood estimation method, as described in more detail herein.

Each of the computing devices 102 is configured to execute a hydrological model, which may be stored locally at the computing devices 102 or in a database such as model database 120 shown in FIG. 1. The computing devices 102 may retrieve the hydrological model from the model database 120 over network 130. The hydrological model is configured to simulate a flood event and provide a model output of the flood event such as extent of flooding and water depth over time associated with the flood event. The hydrological model uses input data including both flood-specific data and model control parameters to simulate the flood event. The control parameters may be stored locally at the computing devices 102, in association with the hydrological model(s) such as in the model database 120, or in a separate database such as control parameter database 122 shown in FIG. 1 and accessible over the network 130. The control parameters define spatial parameters associated with different areas of the Earth, and may include information such as a digital terrain model or digital elevation model, land use and land cover data, friction parameters, infiltration rate parameters, and other information. Flood-specific data for the flood event may include temporal data associated with the flooding event such as precipitation data, water gauge data, etc., and may be received from one or more external sources via network 130, such as a weather server 140, a gauge server 150 that is communicatively coupled to receive water gauge data from water gauge 152, etc. It is preferable that the flood-specific data is received in real-time or near real-time (i.e. subject to any communication delays) so that the input data is as up-to-date as possible. However, as will become apparent from the present disclosure, the flood estimation method can also overcome inaccuracies in the input data, and can even be performed using forecasted flood-specific data (e.g. the flood event is ongoing, and the input data comprises current flood-specific data and forecasted flood-specific data estimated/predicted based on the current flood-specific data), as well as using input data that is provided by executing the simulation in another region (e.g. the model output for a hydrological model executed in an upstream region can be used as input data for a downstream region).

Each of the computing devices 102 is configured to receive input data (i.e. flood specific data and model control parameters) associated with a flood event and execute a hydrological model. As shown in FIG. 1, the computing devices 102 comprise a processing unit (e.g. CPU 104), an input/output (I/O) interface 106, non-volatile storage 108, and a non-transitory computer-readable memory 110. The computing devices 102 are configured to receive the input data via the I/O interface 106. The non-transitory computer-readable memory 110 comprises computer-executable instructions stored thereon which, when executed by the CPU 104, configure the computing device 102 to execute the hydrological model. As previously noted, the computing devices 102 may comprise a plurality of computing devices configured to execute the hydrological model in parallel, and may each execute the hydrological model using different input data as will be further described herein. The hydrological model may itself be executed using parallel processing, such as by using a cellular automaton model which represents the hydrological model using discretized cell states, where cells can interact directly with their neighbours and be iteratively updated. It is also possible for different computing devices to execute a different hydrological using a same set of input data, which as described in more detail herein may be useful to select a hydrological model that provides a satisfactory model output. Parallel processing (for example of the flood simulator) can also comprise processing using graphic processors that can perform these sorts of computations efficiently.

At least one of the computing devices 102 is configured to execute an input data validation/update algorithm 111, which is stored as computer-executable instructions on the non-transitory computer-readable memory 110 of that computing device and configured to be executed by the CPU 104. As described in more detail below, the input data validation/update algorithm 111 is configured to validate the input data by comparing candidate model outputs generated from the input data against external flood data. Based on this comparison, the input data validation/update algorithm 111 can identify one or more candidate input datasets that produce a satisfactory candidate model output relative to the external data.

In an example, the computing devices 102 may be arranged in a master-slave configuration where a master computing device generates and provides a set of input data to respective slave computing devices, and each of the slave computing devices execute the hydrological model using the respective set of input data, and provide their respective outputs to the master computing device for executing the input data validation/update algorithm 111. Alternatively, a single computing device may execute the hydrological model sequentially with different sets of input data. However, use of parallel processing comprising multiple computing devices and/or multiple processors and/or graphics processors decreases computation time in comparison to running the model serially.

To validate the candidate model outputs, external flood data is received over the network 130 from one or more data sources. Various types of external flood data may be used to validate the candidate outputs, In FIG. 1, external flood data may comprise water gauge data received from the gauge server 150 that is communicatively coupled to receive water gauge data from the water gauge 152; social networking service (SNS) data received from a SNS server 160 accessible via an application, which may comprise pictures, videos, and/or other data relating to a flood event published by one or more user devices 162, 164; and earth observation data received from an image server 170, which may comprise images obtained for example from one or more radar systems 172 (e.g. using synthetic aperture radar) and/or from one or more satellites 174. Further details on the use of external data in the model validation/update algorithm is described below.

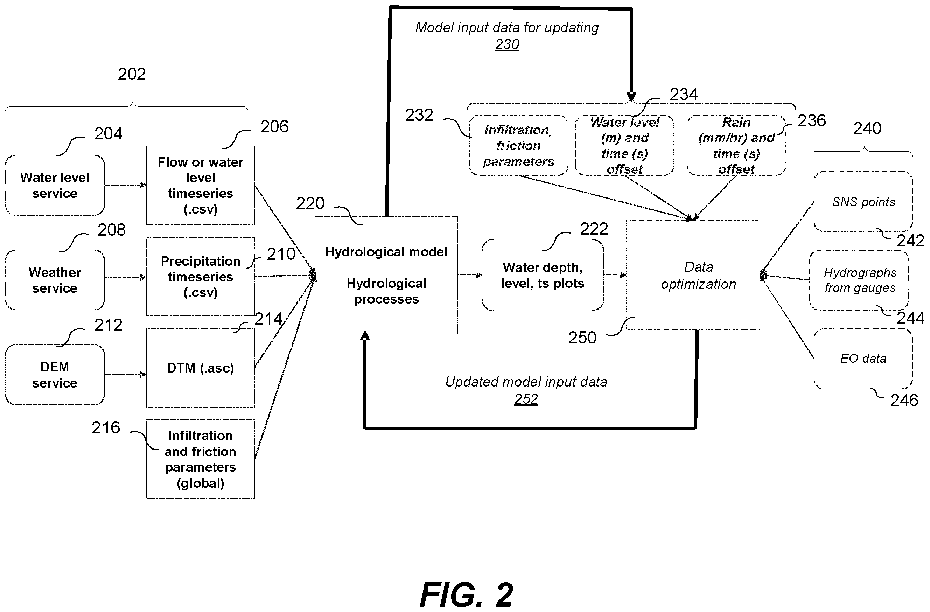

FIG. 2 depicts a general flow performed by the system for executing the flood estimation method.

Input data 202 associated with a flood is received, which comprises flood-specific data and model control parameters. FIG. 2 shows the input data 202 comprising a flow or water level timeseries 206 provided by a water level service 204; a precipitation time series 210 provided by a weather service 208; a digital terrain model (DTM) 214 provided by a digital elevation model (DEM) service 212; and global infiltration and friction parameters 216. It will be appreciated that additional types of input data are possible and the examples of input data 202 shown in FIG. 2 is therefore non-limiting. It will further be appreciated that not all of the input data 202 may be available for a given flood data, such as the flow or water level timeseries 206, which is obtained by one or more water gauges, and may not be available for certain flood locations.

The input data 202 is used by hydrological model 220 which when executed is configured to simulate a flooding event by modelling various hydrological processes using the input data. The hydrological model 220 generates a model output 222 which may for example provide an estimate of water depth and/or water level with respect to time, and/or a flood peak map indicating a peak water depth at different locations for the flood event. The model output 222 is passed to the input data validation/update algorithm which performs data optimization 250. Further, as described with reference to FIG. 1, the hydrological model 220 may be executed multiple times in parallel and therefore multiple model outputs 222 may be passed for data optimization 250.

As previously described, outputs from a hydrological model often contain inaccuracies due to errors in input data, errors computed from the model itself, and/or sensitivity to the input data and other parameters of the model. For example, flood-specific data may have measurement inaccuracies due to geolocation errors, missing values, missing natural variability, etc. Furthermore, inaccuracies can also arise due to the complexity of hydrological modelling in general, meaning that the output of hydrological models is never perfect, and the output can be quite different from reality. In accordance with the present disclosure, performing the data optimization 250 compares the model output(s) 222 against external flood data 240 and validates whether the input data used to execute the hydrological model 220 produces a satisfactory model output. Based on the comparison, the input data can be updated to thereby improve the accuracy of the model output with respect to the external data 240. Accordingly, an iterative process of validating and updating the input data can be applied until the model output 222 provides a satisfactory fit to the external flood data 240. The external flood data may comprise various types of data such as Social Networking Service (SNS) points 242, hydrographs from water gauges 244, and Earth Observation (EO) data 246, as for example described with reference to FIG. 1.

Flood-specific input data and/or model control parameters may be updated. It will be appreciated that only some of the input data may be updated during the data optimization process. The model input data for updating 230 is passed for data optimization 250. The model input data for updating 230 may comprise for example infiltration rate and/or friction parameters 232, input gauge data and any time offset 234, and/or input rainfall data and any time offset 236. As described in more detail herein, since certain input data is received as a time series (e.g. the gauge data and the rainfall data), not only can the values of the respective input data be updated but also the times in the time series (i.e. by applying a time offset). For example, shifting the rainfall input data by an hour forwards or backwards could produce output datasets from the hydrological model that better match the external flood data. This could be because of the differences between the speed at which the water flows over the land in reality and that which is in the model. On the other hand, other input data parameters may be kept constant, such as spatial inputs like DTM and land use landcover (LULC). However, the depiction of model input data for updating 230 in FIG. 2 is provided as an example only and is non-limiting.

Based on a comparison of the model output 222 to the external flood data 240, the model input data for updating 230 can be updated by the data optimization 250 to provide updated model input data 252. If satisfactory, the updated model input data 252 can then be used as input to the hydrological model 220 for simulating the flood. Alternatively, if a more accurate prediction is desired, the updated model input data 252 can be used in a subsequent execution of the hydrological model 220, which generates another model output 222, and the process repeats.

The data optimization 250 may generate the updated model input data by using an optimization routine to update the model input data. Different optimization routines for generating the updated model input data may be used, such as a trust-region dogleg or Levenberg-Marquardt. However, these classic optimizers are serial in nature and may therefore still require hundreds of hours to compute depending on the number of iterations being performed and desired accuracy of the model output to the external data.

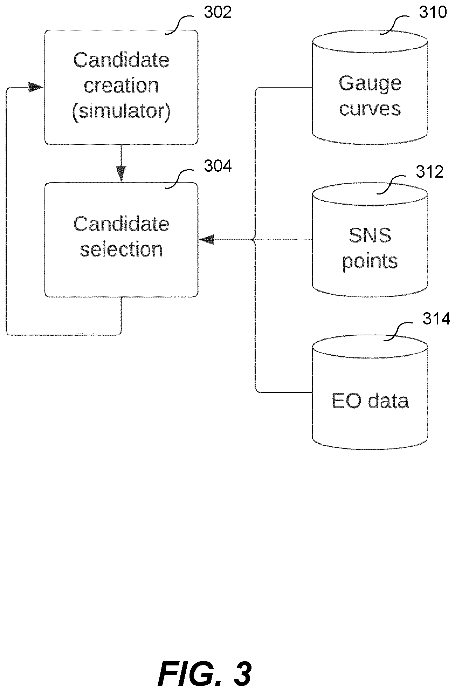

To facilitate execution of the hydrological model in parallel, a plurality of candidate input datasets may be generated, which comprise different variations of the input data and may in preferred implementations comprise for example a stochastic sampling of an offset to be applied to the input data, which are then used to execute the hydrological model and to generate candidate model outputs (i.e. implementing a Monte Carlo method). Further, a preferred optimization routine may be to use a Covariance Matrix Adaptation Evolution Strategy (CMA-ES) algorithm. As an example implementation, the data optimization may function by fitting a distribution (e.g. a Gaussian distribution) to define possible offsets of the model input data for updating (e.g. rainfall offsets, water level offsets, time offsets, etc.), and then sampling the distribution to determine offsets to be applied to the input data. By sampling that distribution by a pre-set number of times (for example 50 times), different offset values (e.g. 50 offsets for the value in the input data) are obtained and used to generate candidate input datasets by applying the sampled offset to the input data. Accordingly, a plurality of candidate input datasets can be generated (e.g. 50 candidate input datasets), each with their own unique combination of input data parameters by sampling offsets to be applied to the input data (i.e. to the model input data for updating). The fitness of each of these candidate input datasets are evaluated by executing the hydrological model with the candidate input datasets to generate candidate output models for comparison against the external data measurement data, as for example further described with reference to FIG. 3. One or more satisfactory candidate input datasets that produce satisfactory candidate model outputs relative to the external data can be used to further generate a subsequent set of candidate input datasets (e.g. by sampling a distribution to determine offsets to be applied to the satisfactory candidate input dataset(s)). Through this iterative approach, the candidate input datasets provide better candidate model outputs relative to the external data.

The generation of candidate input datasets is bounded by boundary conditions, which provide physical constraints based on the received input data and/or external flood data. In the example of the CMA-ES algorithm, the optimization is performed in "genotype"-space, while the simulations are performed in "phenotype"-space. Accordingly, the optimizer is working in a space which is constrained between [-1, 1] in all dimensions and the results are then scaled to a real value space (i.e., x3 value of 0.43 means that the infiltration of forest areas is 22mm/hr). The boundary conditions are different for all parameters in phenotype but identical in genotype, i.e. the optimization space is symmetric but the real values are not.

The goal of the optimization routine is to update the input data so that a candidate model output satisfactorily matches the external flood data. The data optimization 250 may continue to be performed until: a predetermined number of iterations have been performed; each of the plurality of candidate model outputs in the current iteration are within a predetermined threshold of the external flood data; or each of the plurality of candidate model outputs in the current iteration are unchanged from the previous iteration.

FIG. 3 further depicts the external flood data being used to iteratively update the input data used in the hydrological model. The schematic in FIG. 3 is a subset of the flow shown in FIG. 2 in that it only represents the external flood data being used to evaluate the candidate model outputs.

As shown in FIG. 3, the hydrological simulation generates a plurality of candidate model outputs using a plurality of candidate input datasets (302). The candidate model outputs are compared to the external flood data for selecting one or more satisfactory candidate input datasets (304). The external flood data as shown in FIG. 3 may comprise gauge curves 310, Social Networking Service (SNS) points 312, and Earth Observation (EO) data 314. It will also be appreciated that other types of external data may be used as well, and therefore the disclosure is not limited to these examples of external flood data.

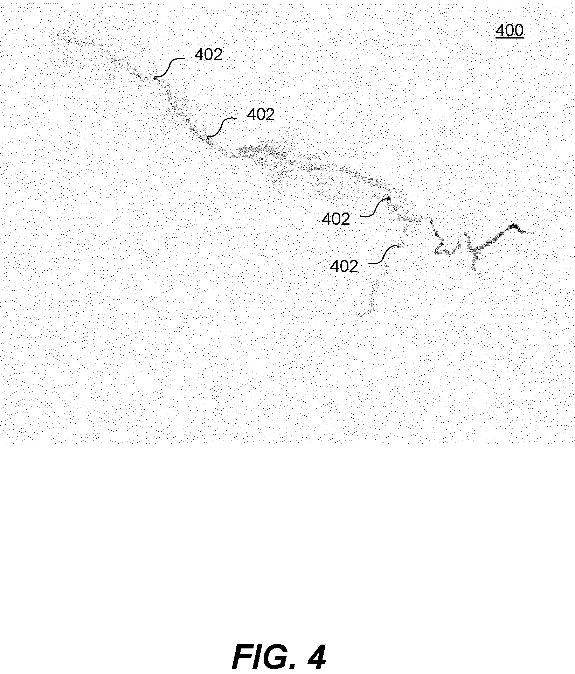

The gauge curves 310 are obtained from one or more water gauges, if present, in an area or upstream from an area experiencing flooding. Advantageously, the gauge curves provide timestamped data over the whole flood event. However, water gauges are typically only situated in waterways and if present, are generally sparse. Further, water gauges can also have geolocation errors or outliers. FIG. 4 depicts a representation of water gauge data points 402 in an example flood area 400.

A comparison between a candidate model output and the gauge curves may be made by evaluating a mean average error between gauge data for a real gauge in the external flood data and a sampling point from the simulated flood set on the location of the gauge. For example, the simulation water depth at the location of the gauge can be saved in the simulated flood at given time increments starting from the same time as the gauge measurements in the gauge curve. The saved simulation water depths over time provides a virtual gauge curve that is the same size as the real gauge curve. A mean average error in meters for the whole curve can be evaluated, where the mean average error is smaller when the curves look more similar. The candidate model outputs can be ranked according to mean average error to each gauge curve.

The SNS data points 312 are found by searching for and identifying valuable images and videos associated with a flood. For example, the images and videos associated with the flood may be found in tweets with flood hashtags, YouTube^{™}, Facebook^{™}, other media posts, Google^{™} images, local news outlets, traffic cameras, etc. To determine a location that the image or video is taken, a geolocating process may be performed. Different strategies for geolocating images or video include finding something in the image that allows for the location to be identified (e.g. the name of a business or a street sign); using context and landmarks within an image to figure out the general location of the image and then use Google Maps^{™} to find the location; using information provided outside of the image such as video commentary, news article text, tweet text, etc.; or randomly "travelling" down streets using Google Street View^{™} in attempt to find the location. To estimate water depth, the image associated with the flooding event showing the water level is compared to reference images such as from Google Street view, where the water level relative to specific buildings as well as reference objects such as cars, street curbs, people, etc. is compared between the two images.

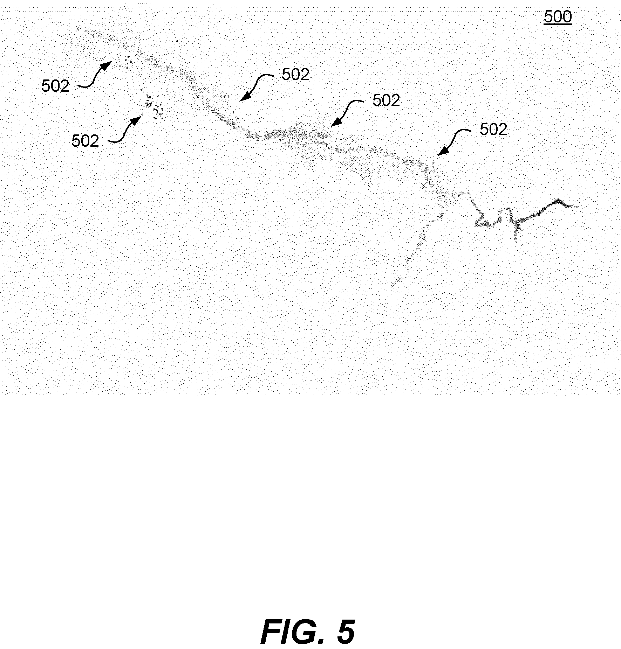

The SNS data points are often abundant and clustered in interesting urban areas, thus providing a potentially large amount of data. However, there may be inaccurate and/or no timestamps (most sources of SNS data don't give the time the image was taken), and depth estimations and geolocation gleaned from the SNS data points may be inaccurate. So the SNS data can provide an estimate of water depth but no timestamp information. Assumptions may also be made that the flooded images/videos are actually taken during the flood event of event. FIG. 5 depicts a representation of Social Networking Service (SNS) data points 502 in an example flood area 500.

Since the SNS data may not provide a timestamp, the SNS data typically does not provide a time series picture of the flooding event, and in particular whether the flood later rose to be higher than what is observed in the SNS point. Comparing the plurality of candidate model outputs against the SNS data may comprise setting a criterion of a water depth at a geolocation based on the SNS data, comparing a simulated water depth at the geolocation for each of the plurality of candidate output models to the criterion, evaluating whether the simulated water depth at the geolocation satisfies the criterion, and if not, evaluating how much lower the simulated depth at the geolocation is relative to the water depth from the SNS data. That is, from the SNS data, a criteria can be that the simulation produced by the hydrological model should reach a water depth value of at least the estimated water depth from the SNS data during some point in the whole simulation time/flood event. This leads to an asymmetric metric: if the simulated flood simulates a water depth at some point at the geolocation that is greater than the estimated water depth from the SNS data, the candidate model output satisfies the SNS metric; and if the simulated flood simulates a water depth at the geolocation that is below the estimated water depth from the SNS data, the candidate model output is evaluated to determine how much lower the simulated flood was than the SNS points indicate that it should have been. Accordingly, the evaluation of the simulated flood may be whether the simulated flood satisfied the SNS data, and if not, how much lower the simulation water depth values were compared to the SNS data. The evaluation of the simulated flood can be computed for each point separately and combined as mean average error, which may be turned into rankings similarly to the gauges.

The EO data 314 comprises image data obtained from observation systems such as radars, satellites, etc. The image data for a region at a time are converted into probability maps using a neural network that predicts a probability of a flood existing in a discretized area of the region at the given time. The probability maps may therefore be considered as geospatial data, e.g., rasters, that overlap a region of the flood event at some time, and are associated with a probability indicative of whether discretized areas within the region are flooded. There will be areas with a high probability that the area is flooded, areas with a low probability that the area is flooded, and other areas with a probability indicating uncertainty. The areas in the region with a high probability of being flooded and areas in the region with a low probability of being flooded may be used for evaluating the hydrological model, and areas with uncertainty discarded. An EO data output vector may be calculated by setting any area with no flood set to -1 and any area with flood set to 1. The areas used in the EO data output vector may be stochastically sampled to fill quotas of high probability areas and low probability areas for use in evaluating the output of the hydrological model. Additionally or alternatively, target areas may be determined, for example using Land Use / Land Cover data, and the areas for use in evaluating the model may be sampled from the target area. For example, an open field may be selected as a target area since the earth observation data in that open field is likely highly accurate. On the other hand, areas within cities, waterways, etc., may not be selected as a target area.

To evaluate the simulated flood, it may be considered that an area is flooded when there is a predetermined depth of water (e.g., 20cm) simulated at that area. The areas of the simulated flood for a candidate model output can thus be converted to a candidate model output vector of -1s and 1s depending on the simulated flooding. The cross entropy of the EO data output vector may then be computed against the candidate model output vector and turned to a metric which is then ranked.

As set forth above, each candidate model output for a given iteration is compared against each external data set and scored/ranked. That is, a candidate model output may be scored according to how it matches one or more gauge curves, one or more SNS data points, and one or more EO datasets (as well as any other type of external data). For example, a candidate model output may be scored according to a mean average error between a simulated water depth at a location of a gauge and the external gauge data; the candidate model output may receive a score if it satisfies an SNS data point (i.e. if the simulated flood simulates a water depth at some point at the geolocation that is greater than the estimated water depth from the SNS data), or be penalized if it does not satisfy the SNS data point (i.e. the simulated flood simulates a water depth at the geolocation that is below the estimated water depth from the SNS data), with the penalty amount optionally further based on the amount that the simulated water depth is below the estimated water depth from the SNS point; and/ or the candidate model output may be scored according to how well the candidate model output vector matches the EO data output vector. A global ranking may be computed by taking into account scores indicative of how the candidate model output matches each of the external datasets. Different weightings may be used to compute the global ranking. For example, scores calculated in relation to the SNS data points may have a lower weighting than scores calculated in relation to gauge data or EO data due to the higher uncertainty of SNS data points.

Candidate input datasets are identified that produce one or more candidate model outputs having a satisfactory ranking (e.g. the best candidate model output, or the top n number of candidate model outputs). These candidate input datasets are therefore validated to produce a candidate model output providing a satisfactory model output. Through the optimization process as for example described with reference to FIG. 2, the candidate input datasets can be used to generate a next iteration of candidate input datasets, thus optimizing the input data to be used for executing the hydrological model.

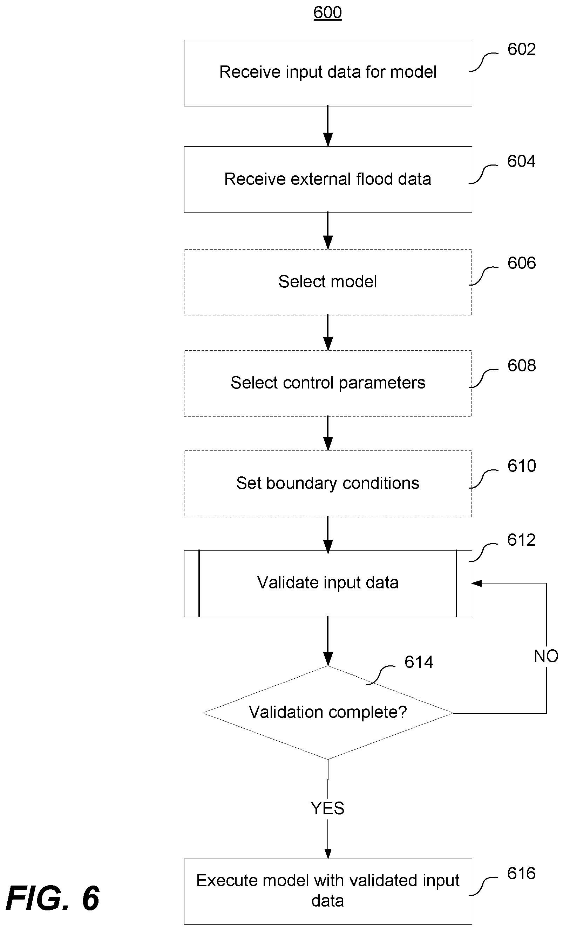

FIG. 6 depicts a flood estimation method 600. The flood estimation method 600 may for example be implemented by the one or more computing devices 102 in FIG. 1.

In the method 600, input data associated with a flood event is received for executing a hydrological model (602). As described previously, the input data may comprise a combination of flood-specific data (e.g. rainfall data, input gauge data, etc.), which may be temporal data, and model control parameters (e.g. infiltration rate, friction parameter, digital terrain model, land use / land cover, etc.), which may be spatial data. Further, external flood data of the flood event is received (604), which may for example include gauge data, SNS data points, earth observation data, etc.

In some implementations of the flood estimation method, a hydrological model may be selected (606). For example, different hydrological models may be available to model the flood event. The different hydrological models may be executed using a same set of the input data and model outputs compared against the external flood data. A hydrological model that generated a satisfactory model output with respect the external flood data may be selected.

In some implementations, one or more model control parameters in the input data may be selected (608). For example, it will be appreciated that while some parameters in the input data such as rainfall data for example may be readily iterated, model control parameters such as the digital terrain model may not lend themselves to being iteratively updated. Different digital terrain models may be available, and the method 600 may comprise executing a hydrological model with a same set of input data except for the digital terrain model, and comparing the different model outputs against the external flood data. A digital terrain model used in the input data that generated a satisfactory model output with respect to the external flood data may be selected.

Further, boundary conditions for the hydrological model may be generated (610). The boundary conditions may be generated according to one or both of the input data and the external data, and are used as boundaries that limit the generation of candidate input datasets as described below. For example, boundary conditions may represent locations in the simulation domain where water flows into or out of the domain due to external factors. Rainfall, lakes, streams, stormwater manholes, and groundwater wells are all examples of boundary conditions. Rainfall for example may be measured as the amount rainfall per unit time for each grid within a simulation domain or at a single rain gauge within the simulation domain. Rainfall as a boundary condition may be set either as different rainfall amount per unit time at each grid or same rainfall amount per unit time on the entire simulation domain. As another example, the rate of flow (discharge) from lakes or upstream streams may be measured by sensors in gauges at the outlet. Thus, contributions of lakes or streams per unit time as boundary conditions may be set as input data from gauges. Other measurements like stormwater outflow from manholes can also help to define boundary conditions. Further, as described above the input data for a simulation may comprise simulated output data from a simulation performed on an upstream region. Such upstream data may be used to define boundary conditions for a simulation of a downstream region.

The flood estimation method 600 validates the input data over one or more iterations based on the external flood data (612). Specifically, at each iteration, a plurality of candidate input datasets are generated and used to execute the hydrological model. A plurality of candidate model outputs are compared against the external flood data to identify one or more satisfactory candidate input datasets, which may be used in the next iteration. In this manner, the input data is validated by evaluating whether the input data generates a satisfactory model output.

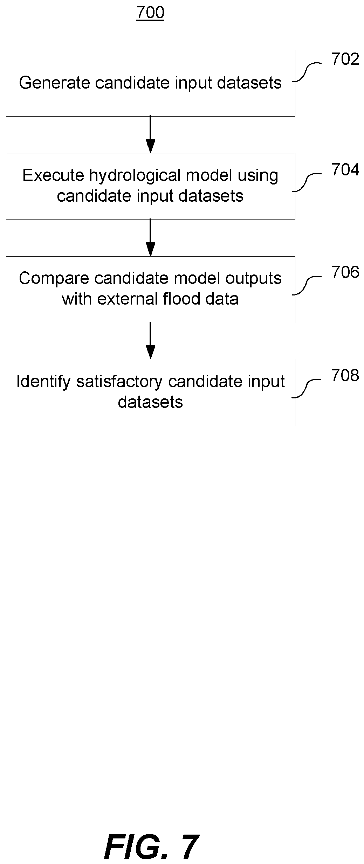

FIG. 7 depicts a method 700 of validating the input data. The method 700 may be performed at each iteration of validating the input data at 612 in the method 600.

A plurality of candidate input datasets are generated for a current iteration (702). The plurality of candidate input datasets for a first iteration are generated from the received input data, and the plurality of candidate input datasets for a subsequent iteration are generated based on one or more satisfactory candidate input datasets from a previous iteration. Generating the plurality of candidate input datasets may comprise stochastically sampling an offset for the input data (i.e. applying a Monte Carlo method) and applying the offset to the input data. Where the input data comprises a single value (e.g. friction), a single offset may be sampled from a distribution of offsets for that value. Where the input data comprises a time series of values (e.g. water level data, precipitation data, etc.), both a value offset (e.g. water level, rainfall) and a time offset may be sampled from respective distributions. In some implementations, the distribution of offsets may be a Gaussian distribution set according to expected offset values, which may be based on errors in measurement instruments, location errors, etc..

The hydrological model is executed with the plurality of candidate input datasets to generate a plurality of candidate model outputs (704). As previously described, executing the hydrological model with the plurality of candidate input datasets may comprise executing the hydrological model in parallel with each of the plurality of candidate input datasets for the current iteration. Thus, one computing device may instruct a plurality of other computing devices to execute the hydrological model in parallel using different candidate input datasets.

The plurality of candidate model outputs are compared against the external flood data to identify the one or more satisfactory candidate input datasets from the current iteration (706). As previously described, each of the plurality of candidate model outputs may be scored according to how closely they match the external flood data. Comparing the plurality of candidate model outputs against the external flood data may comprise determining an average error between the candidate model output and the external flood data (e.g. when comparing the candidate model outputs to gauge data, for example). Additionally or alternatively, comparing the plurality of candidate model outputs may comprise determining whether the candidate model output satisfies a flood criterion set by the external flood data, and if the candidate model output is unsatisfactory with respect to the flood criterion, determining a distance to the flood criterion (e.g. when comparing the candidate model outputs to SNS data points or Earth Observation data, for example). One or more satisfactory candidate model outputs may be identified by ranking the plurality of candidate outputs according to the scoring and identifying a predetermined number of candidate outputs having a best score, or identifying the one or more satisfactory candidates outputs as candidate outputs having a score above a threshold. The external flood data may comprise a plurality of external datasets, and comparing each of the plurality of candidate outputs to the external flood data comprises comparing each of the plurality of candidate outputs to each of the plurality of external datasets. The candidate model outputs may be ranked according to a global score calculated based on how well a candidate model outputs fits all of the external datasets.

From the identification of satisfactory candidate model outputs, one or more satisfactory candidate input datasets are identified (708). The satisfactory candidate input datasets may be used in a subsequent iteration (i.e. to generate a plurality of candidate input datasets in a subsequent iteration at 702), or the model may be executed using one of the satisfactory candidate input datasets or an ensemble of multiple satisfactory candidate input datasets.

Specifically, referring back to FIG. 6, a determination is made as to whether the validation is complete (614). For example, validating the input data may comprise determining at each iteration a measure (e.g. a score) of how closely each of the plurality of candidate model outputs match the external flood data, and the validation may be performed until: (a) each of the plurality of candidate model outputs in the current iteration are within a predetermined threshold of the external flood data; (b) each of the plurality of candidate model outputs in the current iteration are unchanged from the previous iteration; or (c) a predetermined number of iterations have been performed without satisfying (a) or (b).

If the validation is not complete (NO at 614), the method returns to 612 and continues to validate the input data (i.e. performs another iteration in accordance with the method 700). If the validation is complete (YES at 614), the hydrological model is estimated using validated input data to estimate water levels of the flood event (616). The validated input data is based on a candidate input dataset providing a candidate model output with a satisfactory fit to the external flood data. In some implementations, the method 600 may further comprise generating and displaying a peak flood map of the flood event from the estimate of water levels.

In accordance with the method of validating the input data and the parallel nature in which the hydrological model can be executed using different candidate input datasets, the method 600 may be performed in a relatively short time (e.g. on the order of minutes or hours) and at a relatively low cost. Accordingly, the flood estimation method may be performed as input data and/or external flood data is updated, and thus use the latest available data in the flood estimation method.

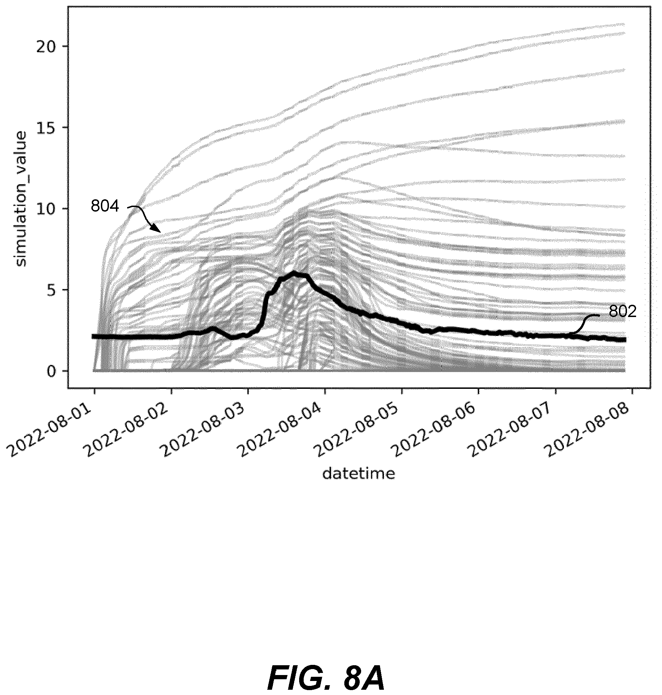

FIGs. 8A to 8C depict an iterative refinement of candidate outputs towards external gauge data in accordance with the flood estimation method. As previously described, a gauge curve (solid black line 802) is generated from the real gauge data that provides a time series of water depths or water levels at a particular location. The simulated values of water depths/levels over time (lighter grey lines, 804) from candidate model outputs generated from different candidate input datasets are compared to the gauge curve. FIG. 8A shows the simulated values of water depths/levels over time produced by 100 candidate model outputs generated from a first iteration of 100 candidate input datasets.

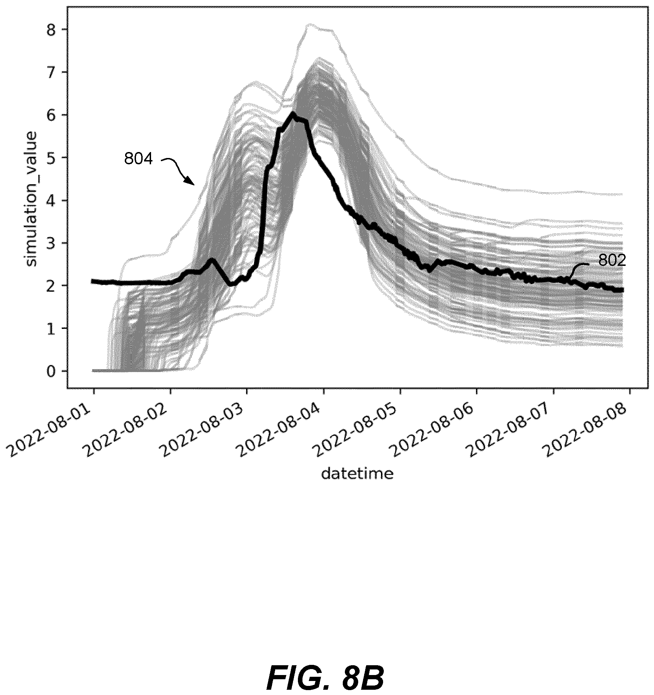

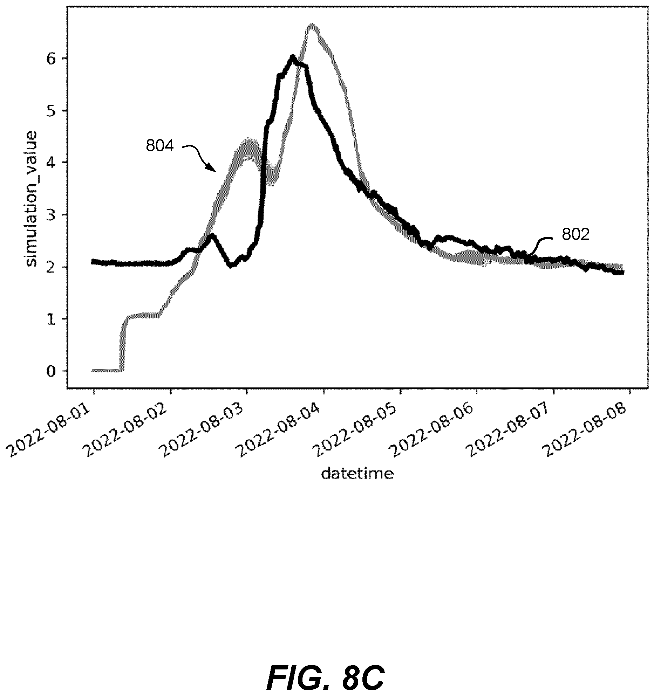

As the candidate input datasets are updated and validated through the iterative optimization process of the flood estimation method, the candidate model outputs 804 converge toward the gauge curve 802 as well as to each other, as shown in FIGs. 8B and 8C (notice the scale of the y-axis), which respectively show the simulated values of water depths/levels over time produced by 100 candidate model outputs generated from an eighth and a thirtieth iteration, respectively.

It will be appreciated that in FIG. 8C there is still a difference between the plurality of candidate model outputs and the gauge curve 802. This is because as previously described, each of the plurality of candidate model outputs are compared against each external dataset of the external data, and accordingly a satisfactory candidate model output may be identified according to how it matches all of the external datasets (e.g. based on a global score). In this example of FIGs. 8A-C, the candidate model outputs were also compared against datasets from three other gauges as well as SNS data points.

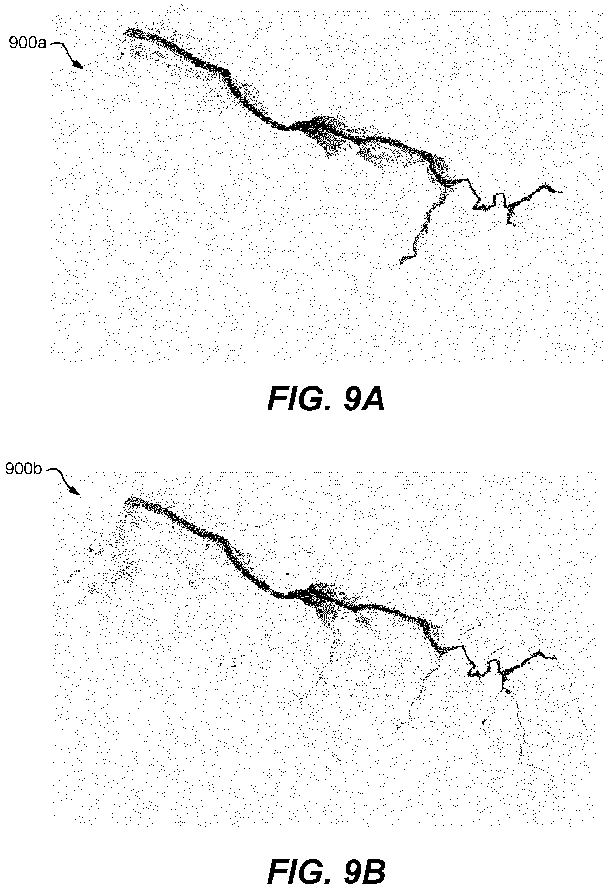

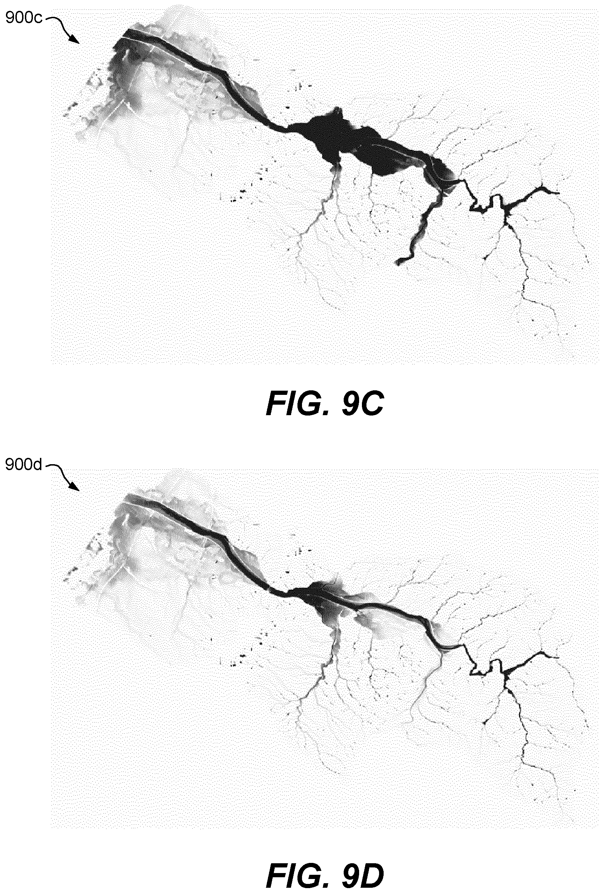

FIGs. 9A to 9D show examples of different peak water depth outputs simulated using different candidate input datasets. The graphs 900a, 900b, 900c, and 900d depict a visual representation of a simulated flood by showing a peak water depth at different locations over the geographical area of interest.

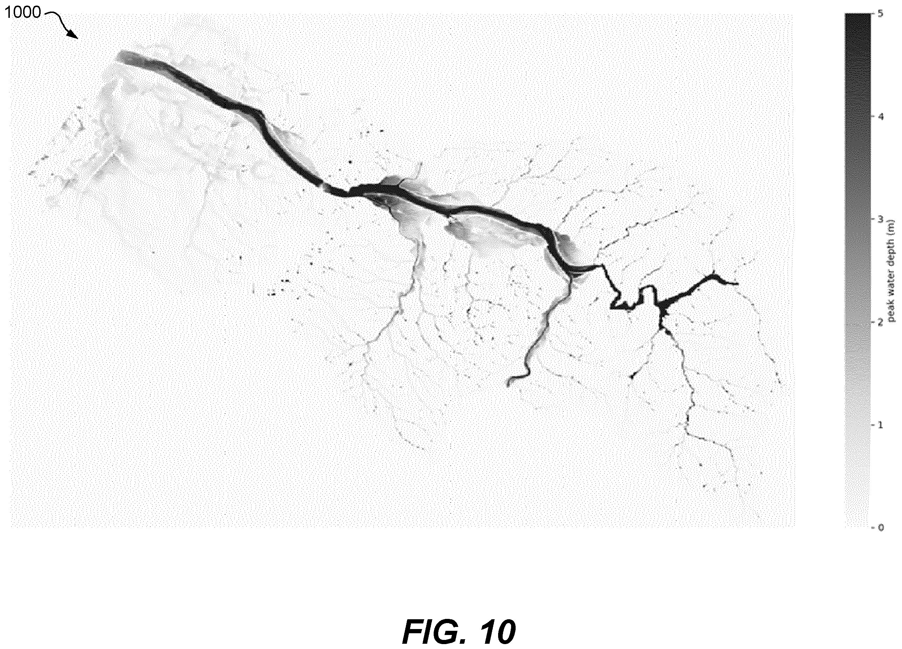

FIG. 10 depicts an example of a peak flood map 1000. In accordance with the flood estimation method described herein, an accurate flood peak can be determined because the model output has been satisfactorily validated against external data.

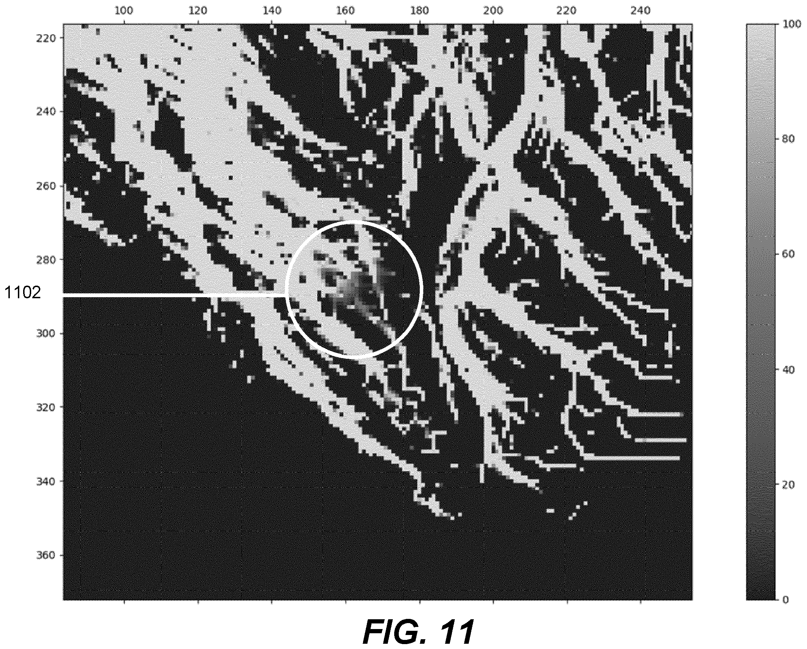

FIG. 11 depicts a representation of an area of uncertainty 1102 in the simulated flood. It is possible that some areas of the simulated flood may be uncertain based on the available input data, and accordingly the candidate model outputs of the flood estimation method may not converge to the external flood data in these areas.

The embodiments have been described above with reference to flow, sequence, and block diagrams of methods, apparatuses, systems, and computer program products. In this regard, the depicted flow, sequence, and block diagrams illustrate the architecture, functionality, and operation of implementations of various embodiments. For instance, each block of the flow and block diagrams and operation in the sequence diagrams may represent a module, segment, or portion of code, which comprises one or more executable instructions for implementing the specified action(s). In some alternative embodiments, the action(s) noted in that block or operation may occur out of the order noted in those figures. For example, two blocks or operations shown in succession may, in some embodiments, be executed substantially concurrently, or the blocks or operations may sometimes be executed in the reverse order, depending upon the functionality involved. Some specific examples of the foregoing have been noted above but those noted examples are not necessarily the only examples. Each block of the flow and block diagrams and operation of the sequence diagrams, and combinations of those blocks and operations, may be implemented by special purpose hardware-based systems that perform the specified functions or acts, or combinations of special purpose hardware and computer instructions.

The terminology used herein is for the purpose of describing particular embodiments only and is not intended to be limiting. Accordingly, as used herein, the singular forms "a", "an", and "the" are intended to include the plural forms as well, unless the context clearly indicates otherwise (e.g., a reference in the claims to "a challenge" or "the challenge" does not exclude embodiments in which multiple challenges are used). It will be further understood that the terms "comprises" and "comprising", when used in this specification, specify the presence of one or more stated features, integers, steps, operations, elements, and components, but do not preclude the presence or addition of one or more other features, integers, steps, operations, elements, components, and groups. Directional terms such as "top", "bottom", "upwards", "downwards", "vertically", and "laterally" are used in the following description for the purpose of providing relative reference only, and are not intended to suggest any limitations on how any article is to be positioned during use, orto be mounted in an assembly or relative to an environment. Additionally, the term "connect" and variants of it such as "connected", "connects", and "connecting" as used in this description are intended to include indirect and direct connections unless otherwise indicated. For example, if a first device is connected to a second device, that coupling may be through a direct connection or through an indirect connection via other devices and connections. Similarly, if the first device is communicatively connected to the second device, communication may be through a direct connection or through an indirect connection via other devices and connections. The term "and/or" as used herein in conjunction with a list means any one or more items from that list. For example, "A, B, and/or C" means "any one or more of A, B, and C".

It is contemplated that any part of any aspect or embodiment discussed in this specification can be implemented or combined with any part of any other aspect or embodiment discussed in this specification.

The scope of the claims should not be limited by the embodiments set forth in the above examples, but should be given the broadest interpretation consistent with the description as a whole.

It should be recognized that features and aspects of the various examples provided above can be combined into further examples that also fall within the scope of the present disclosure. In addition, the figures are not to scale and may have size and shape exaggerated for illustrative purposes.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A flood estimation method, comprising:
receiving input data associated with a flood event for executing a hydrological model;
receiving external flood data of the flood event;
validating the input data over one or more iterations based on the external flood data, by performing, at each of the one or more iterations:
generating a plurality of candidate input datasets for a current iteration, the plurality of candidate input datasets for a first iteration generated from the input data, and the plurality of candidate input datasets for a subsequent iteration generated based on one or more satisfactory candidate input datasets from a previous iteration;
executing the hydrological model with the plurality of candidate input datasets to generate a plurality of candidate model outputs; and
comparing the plurality of candidate model outputs against the external flood data to identify the one or more satisfactory candidate input datasets from the current iteration; and
executing the hydrological model using validated input data to estimate water levels of the flood event, the validated input data based on a candidate input dataset providing a candidate model output with a satisfactory fit to the external flood data.

2. The flood estimation method of claim 1, wherein the plurality of candidate input datasets for the current iteration are generated for the first iteration from a stochastic sampling of an offset for the input data, and are generated for subsequent iterations from a stochastic sampling of an offset for the one or more satisfactory candidate input datasets from a previous iteration.

3. The flood estimation method of claim 2, wherein the offset is stochastically sampled from a distribution of offsets for the input data.

4. The flood estimation method of any one of claims 1 to 3, further comprising determining at each iteration a measure of how closely each of the plurality of candidate model outputs match the external flood data, wherein validating the input data over the one or more iterations is performed until:
(a) each of the plurality of candidate model outputs in the current iteration are within a predetermined threshold of the external flood data;
(b) each of the plurality of candidate model outputs in the current iteration are unchanged from the previous iteration; or
(c) a predetermined number of iterations have been performed without satisfying (a) or (b).

5. The flood estimation method of any one of claims 1 to 4, wherein executing the hydrological model with the plurality of candidate input datasets comprises executing the hydrological model in parallel with each of the plurality of candidate input datasets for the current iteration.

6. The flood estimation method of any one of claim 1 to 5, wherein comparing each of the plurality of candidate model outputs to the external flood data comprises scoring each of the plurality of candidate model outputs according to how closely they match the external flood data.

7. The flood estimation method of any one of claims 1 to 6, wherein the external flood data comprises a plurality of external datasets, and comparing each of the plurality of candidate model outputs to the external flood data comprises comparing each of the plurality of candidate model outputs to each of the plurality of external datasets.

8. The flood estimation method of any one of claims 1 to 7, wherein comparing the plurality of candidate model outputs against the external flood data comprises one or more of:
determining an average error between the candidate model output and the external flood data; and
determining whether the candidate model output satisfies a flood criterion set by the external flood data, and if the candidate model output is unsatisfactory with respect to the flood criterion, determining a distance to the flood criterion.

9. The flood estimation method of any one of claims 1 to 8, wherein the external flood data comprises one or more of: earth observation data, gauge data, and social networking service data.

10. The flood estimation method of any one of claims 1 to 9, further comprising generating boundary conditions from one or both of the input data and the external data, the boundary conditions being used as boundaries that limit the plurality of candidate input datasets.

11. The flood estimation method of any one of claims 1 to 10, further comprising selecting the hydrological model from a plurality of hydrological models, wherein selecting the hydrological model comprises:
executing each of the plurality of hydrological models using a same input dataset to generate respective model outputs for each of the plurality of hydrological models;
comparing the respective model outputs to the external flood data; and
selecting the hydrological model that generated a satisfactory model output with respect to the external flood data.

12. The flood estimation method of any one of claims 1 to 11, further comprising generating and displaying a peak flood map of the flood event from the estimate of water levels.

13. A system, comprising:
a database having input data associated with a flood event and external flood data stored therein;
a processor; and
a non-transitory computer readable medium having stored thereon computer program code that is executable by the processor and that, when executed by the processor, causes the system to perform the flood estimation method of any one of claims 1 to 12.

14. The system of claim 13, further comprising a plurality of processors configured to run in parallel, and wherein the plurality of processors are configured to execute the hydrological model in parallel using respective ones of the plurality of stochastic input datasets to generate the plurality of candidate outputs.

15. A non-transitory computer readable medium having stored thereon computer program code that is executable by a processor and that, when executed by the processor, causes the processor to perform the method of any one of claims 1 to 12.

## Amended claims

### Amended claims in accordance with Rule 137(2) EPC.

1. A computer-implemented flood estimation method, comprising:
receiving input data associated with a flood event for executing a hydrological model (220);
receiving external flood data (240) of the flood event;
validating the input data over one or more iterations based on the external flood data (240), by performing, at each of the one or more iterations:
generating a plurality of candidate input datasets for a current iteration, the plurality of candidate input datasets for a first iteration generated from the input data, and the plurality of candidate input datasets for a subsequent iteration generated based on one or more satisfactory candidate input datasets from a previous iteration;
executing the hydrological model (220) with the plurality of candidate input datasets to generate a plurality of candidate model outputs (222); and
comparing the plurality of candidate model outputs (222) against the external flood data (240) to identify the one or more satisfactory candidate input datasets from the current iteration; and
executing the hydrological model (220) using validated input data to estimate water levels of the flood event, the validated input data based on a candidate input dataset providing a candidate model output (222) with a satisfactory fit to the external flood data (240).

2. The computer-implemented flood estimation method of claim 1, wherein the plurality of candidate input datasets for the current iteration are generated for the first iteration from a stochastic sampling of an offset for the input data, and are generated for subsequent iterations from a stochastic sampling of an offset for the one or more satisfactory candidate input datasets from a previous iteration.

3. The computer-implemented flood estimation method of claim 2, wherein the offset is stochastically sampled from a distribution of offsets for the input data.

4. The computer-implemented flood estimation method of any one of claims 1 to 3, further comprising determining at each iteration a measure of how closely each of the plurality of candidate model outputs (222) match the external flood data (240), wherein validating the input data over the one or more iterations is performed until:
(a) each of the plurality of candidate model outputs (222) in the current iteration are within a predetermined threshold of the external flood data (240);
(b) each of the plurality of candidate model outputs (222) in the current iteration are unchanged from the previous iteration; or
(c) a predetermined number of iterations have been performed without satisfying (a) or (b).

5. The computer-implemented flood estimation method of any one of claims 1 to 4, wherein executing the hydrological model (220) with the plurality of candidate input datasets comprises executing the hydrological model (220) in parallel with each of the plurality of candidate input datasets for the current iteration.

6. The computer-implemented flood estimation method of any one of claim 1 to 5, wherein comparing each of the plurality of candidate model outputs (222) to the external flood data (240) comprises scoring each of the plurality of candidate model outputs (222) according to how closely they match the external flood data (240).

7. The computer-implemented flood estimation method of any one of claims 1 to 6, wherein the external flood data (240) comprises a plurality of external datasets, and comparing each of the plurality of candidate model outputs (222) to the external flood data (240) comprises comparing each of the plurality of candidate model outputs (222) to each of the plurality of external datasets.

8. The computer-implemented flood estimation method of any one of claims 1 to 7, wherein comparing the plurality of candidate model outputs (222) against the external flood data (240) comprises one or more of:
determining an average error between the candidate model output (222) and the external flood data (240); and
determining whether the candidate model output (222) satisfies a flood criterion set by the external flood data (240), and if the candidate model output (222) is unsatisfactory with respect to the flood criterion, determining a distance to the flood criterion.

9. The computer-implemented flood estimation method of any one of claims 1 to 8, wherein the external flood data (240) comprises one or more of: earth observation data, gauge data, and social networking service data.

10. The computer-implemented flood estimation method of any one of claims 1 to 9, further comprising generating boundary conditions from one or both of the input data and the external data, the boundary conditions being used as boundaries that limit the plurality of candidate input datasets.

11. The computer-implemented flood estimation method of any one of claims 1 to 10, further comprising selecting the hydrological model (220) from a plurality of hydrological models, wherein selecting the hydrological model (220) comprises:
executing each of the plurality of hydrological models using a same input dataset to generate respective model outputs (222) for each of the plurality of hydrological models;
comparing the respective model outputs (222) to the external flood data (240); and
selecting the hydrological model (220) that generated a satisfactory model output with respect to the external flood data (240).

12. The computer-implemented flood estimation method of any one of claims 1 to 11, further comprising generating and displaying a peak flood map of the flood event from the estimate of water levels.

13. A system, comprising:
a database having input data associated with a flood event and external flood data (240) stored therein;
a processor; and
a non-transitory computer readable medium having stored thereon computer program code that is executable by the processor and that, when executed by the processor, causes the system to perform the flood estimation method of any one of claims 1 to 12.

14. The system of claim 13, further comprising a plurality of processors configured to run in parallel, and wherein the plurality of processors are configured to execute the hydrological model (220) in parallel using respective ones of the plurality of stochastic input datasets to generate the plurality of candidate outputs (222).

15. A non-transitory computer readable medium having stored thereon computer program code that is executable by a processor and that, when executed by the processor, causes the processor to perform the method of any one of claims 1 to 12.
